# EUROPÄISCHE PATENTSCHRIFT

(11) **EP 0 857 139 B1**
(45) Veröffentlichungstag und Bekanntmachung des Hinweises auf die Patenterteilung: **07.04.1999**
(21) Anmeldenummer: 96934787.1
(22) Anmeldetag: 23.10.1996
(51) Int. Cl.: B64C 39/06, B64C 27/10, B64C 39/00

(54) **FLUGKÖRPER**
AIRCRAFT
AERONEF

(30) Priorität: 28.10.1995 DE 19540272
(43) Veröffentlichungstag der Anmeldung: 12.08.1998
(73) Patentinhaber: Schier, Johannes, 53604 Bad Honnef (DE)
(72) Erfinder: Schier, Johannes, 53604 Bad Honnef (DE)
(74) Vertreter: Patentanwälte Meinke, Dabringhaus und Partner
(86) Internationale Anmeldenummer: EP9604590
(87) Internationale Veröffentlichungsnummer: WO9716343

(56) Entgegenhaltungen:
- DE-A- 3 729 231
- FR-A- 1 038 846
- FR-A- 2 532 273
- GB-A- 295 177
- US-A- 2 551 455
- US-A- 3 135 481
- US-A- 3 394 906
- US-A- 3 489 374

## Beschreibung

Die Erfindung richtet sich auf einen drehmomentausgeglichenen Flugkörper mit einem in einer Zentralachse angeordneten motorgetriebenen Propeller und einer Nutzlastaufnahme, wobei der zentrische, vom Antriebsmotor angetriebene Propeller einerseits und relativ dazu der Motor und/oder ein daran angeordnetes Drehmomenten-Ausgleichmittel andererseits gegenläufig drehbar und insgesamt gegenüber der Nutzlastaufnahme im wesentlichen um die gleiche Achse drehbar gelagert sind, und daß zum verschwenken oder verschieben der Nutzlastaufnahme relativ zum Antriebsmotor ein Servo-Antrieb vorgesehen ist.

Derartige Flugkörper sind beispielsweise aus der gattungsbildenden US-3 135 481 bzw. aus der inhaltlich vergleichbaren DE-A-37 29 231 bekannt. Andere nach dem Luftkissenprinzip arbeitende Ringflügel-Flugkörper zeigt beispielsweise die WO 90/13478. Einen ähnlichen Flugkörper, wenigstens was die Flugtheorie angeht, zeigt die DE-40 37 472-A1. Auch die DE-41 12 585 beschäftigt sich mit einem ähnlichen Prinzip, wobei neben dem Auftriebspropeller eine Vortriebturbine vorgesehen ist. Aus der Fülle weiterer Lösungen seien hier noch die DE-37 34 811-A1, DE-36 44 899-A1 ,DE-36 06 362-A1, EP-0 661 206-A1, FR-A-1 038 846, GB-A-295 177 oder die US-Patentschriften 3 489 374, 3 394 906 bzw. 2 551 455 genannt.

Ein Hauptproblem der bekannten Lösungen liegt in deren instabiler Fluglage, schlechten Steuerungsmöglichkeit und zum Teil hohem technischen Aufwand, wobei einige der Lösungen eine Flugfähigkeit ohnehin als schwer denkbar erscheinen lassen.

Aufgabe der Erfindung ist die Schaffung einer Lösung, mit der ein Flugkörper in stabiler Fluglage bei einfacher Steuerungsmöglichkeit Nutzlasten und/oder Personen befördern kann.

Diese Aufgabe wird gemäß der Erfindung dadurch gelöst, daß als Drehmomenten-Ausgleichmittel ein Ringflügel vorgesehen ist.

Mit der Erfindung wird mit vergleichsweise einfachen Mitteln eine äußerst stabil einstellbare Fluglage möglich, d.h. ein so ausgestatteter Flugkörper ist in der Lage, die Nutzlast in einer vorbestimmbaren Position zu halten, was beispielsweise dann von erheblicher Bedeutung ist, wenn als Nutzlast Meßinstrumente vorgesehen sind oder etwa eine Überwachungskamera, etwa um Bauwerke zu inspizieren, um nur ein Beispiel zu nennen.

Der Ringflügel-Flugkörper nach der Erfindung nutzt zur Erzeugung einer äußerst stabilen Fluglage das Gegendrehmoment des Motors einerseits und des Propellers andererseits aus. Der Antrieb setzt sich zusammen aus dem Propeller-Auftrieb und dem Ringflügel-Auftrieb.

Dadurch, daß der Propeller in dem als Kreisring ausgeführten Ringflügel umläuft, entsteht die Wirkung eines Mantelpropellers, d.h. bei gleicher Drehzahl der beiden relativ zueinander umlaufenden Antriebsorgane entsteht die doppelte Schubkraft gegenüber einer nicht ummantelten Luftschraube. Außerdem reduziert sich die Lärmentwicklung.

Der Ringflügel-Auftrieb entsteht insbesondere durch Unterdruckerzeugung auf der Oberseite des Ringflügels durch die vom Propeller erzeugte Luftströmung, was auch als Coanda-Effekt bezeichnet wird, worunter man die Ablenkung einer Strömung versteht, wenn ein fester Körper an die Strömungsgrenzfläche gebracht wird. Dabei wird der Luftstrom in Richtung des festen Störkörpers hin abgelenkt und erzeugt durch die Impulsänderung eine Reaktionskraft, die eine Auftriebs- und Schubkomponente liefert. Außerdem wird die Druckverteilung am Ringflügel geändert, so daß auf der Ringflügeloberseite ein Unterdruckgebiet entsteht, was zu einem zusätzlichen Saugschub und damit zu einer Auftriebssteigerung führt.

Mit der Erfindung ist es möglich, Nutzlasten in einfacher Weise in der Luft zu positionieren, da ein erfindungsgemäßer Flugkörper die Flugeigenschaften eines Hubschraubers mit denen eines horizontal fliegenden Flugzeuges in einfachster Weise kombiniert und die Vorteile beider Flugarten für sich nutzbar macht.

Durch die äußerst einfache Steuerung und einfache Bedienung bietet sich ein solcher Ringflügel-Flugkörper für eine Fülle von Anwendungsgebieten an. Hier seien nur einige genannt:
- Altlastenerkundung
- Biotopenerfassung und -überprüfung
- Waldschadenserhebung
- Waldbrandbekämpfung (Abwurf von Nitroglyzerin)
- Gewässerschutz (Küste, Seen, Flüsse)
- Verkehrsbeobachtung
- Immissionsschutz
- Emissionskontrolle
- Messungen thermischer Belastungen
- Bergschädenüberwachung
- Messung radioaktiver Strahlung in KKW-Bereichen
- Pipeline-Überwachung (Öl, Gas, Wasser)
- Überwachung von größeren Industriezonen und -anlagen
- Schadstoffanalyse in der Luft
- Expeditionsaufklärung
- Sofortüberblick in Katastrophenfällen
- Land- und Gewässervermessungen (Aerophotogrammetrie)
- vermißtensuche in unwegsamem Gelände
- Naturreservatskontrollen (Artenschutz, Zählung, Beobachtung)
- Luftbild- und Datenfernübertragung
- Spielfilm- und TV-Produktionen (Trickaufnahmen, Kameraführung)
- Luftbild- und Filmaufnahmen (Häuser, Fabriken, Grundstücke etc.)
- Sanierungsdokumentation
- automatische Grenzüberwachung
- See- und Schiffahrtskontrollen
- Windmessungen für Windgutachten (Windkraftwerke)
- Inspektionen von Strom-Überlandleitungen
- Inspektionen von Gebäuden, Brücken, Türmen u. Staudämmen
- als Luftlastkran und -transporter
- als fliegende Rettungskabine für in Not geratene Menschen
- als exclusives Werbemittel für TV-Anstalten und internationale, renommierte Werbeagenturen
- TV-Berichterstattng (life aus gefährlichen Zonen, z.B. Bosnien)
- Kontrolle von UNO-Schutzzonen oder Waffenstillstandsgebieten

Vorteilhafte Ausgestaltungen der Erfindung ergeben sich aus den Unteransprüchen.

Zweckmäßig ist der Ringflügel von einem im wesentlichen hohl ausgebildeten Ringkörper mit nach außen weisenden, im wesentlichen in der Ruhelage horizontal ausgerichteten Flügelelementen gebildet, wobei es diese Gestaltung möglich macht, durch die Art der Flügelelemente am Außenumfang des Ringkörpers neben der Schraube hier zusätzlich für Auftrieb zu sorgen. Der hohle Ringkörper kann ggf. in einfacher Weise als Tank benutzt werden, da er drehfest mit dem Träger des Motors verbunden ist und daher eine einfache Zuleitung von Treibstoff zum Motor möglich ist.

Mit den Flügelelementen bzw. Stummelflügeln am Außenumfang des Ringflügels läßt sich durch den Magnus-Effekt ein zusätzlicher Auftrieb erzeugen, wobei sich Anordnung und Zahl der jeweiligen Flügelelemente in der Regel nach der Größe der Nutzlast richtet.

Die Außenflügel rotieren z.B. mit ca. 300 U/Min. und erzeugen, wie normale Flugzeugtragflächen, durch das Profil einen aerodynamischen Auftrieb. Die Anzahl der Tragflächen hängt, wie schon erwähnt, vom benötigten Auftrieb ab.

Ein zusätzlicher Effekt läßt sich dadurch erzeugen, daß im Ablufstrom des Propellers Abluftturbinen-Schaufeln mit drehfester Verbindung zum Ringflügel vorgesehen sind, -womit der Auftrieb zusätzlich steigerbar ist.

Eine äußerst einfache Steuerung des Ringflügel-Flugkörpers nach der Erfindung kann beispielsweise in zwei Alternativen bestehen, etwa in der Weise, daß im Übergangsbereich zwischen Antriebsmotor mit Propeller und Ringflügel und der Nutzlastaufnahme eine Schwenkeinrichtung um einen Lagerzapfen zur Veränderung des Vertikalwinkels zwischen der Antriersmittelachse einerseits und der Nutzlastmittelachse andererseits vorgesehen ist.

Eine Variante dieser einfachen Steuermöglichkeit besteht darin, daß im Übergangsbereich zwischen Antriebsmotor mit Propeller und Ringflügel und der Nutzlastaufnahme zur Verstellung des Systemschwerpunktes ein Verschiebeantrieb zum verschieben der Antriebsmittelachse in ihrer Wirklinie zur Nutzlastaufnahme-Mittelachse vorgesehen ist.

Dabei ist es möglich, Verschiebungen oder Verschwenkungen über einen Servo-Motor zu bewirken.

Wie eingangs schon angesprochen, gibt es andere Möglichkeiten, die Drehmomenten-Ausgleichsmittel in erfindungsgemäßer Weise auszugestalten. So kann nach der Erfindung vorgesehen sein, daß als Drehmomenten-Ausgleichsmittel die Abluftturbine selbst, ein zum Propeller gegenläufig rotierender Ring, eine Scheibe, ein Zylinder, ein Stummelflügel aufweisender Drehkranz und/oder dergleichen vorgesehen sind.

Eine andere Möglichkeit besteht darin, als Drehmomenten-Ausgleichsmittel gegenläufig rotierende Elemente des Antriebsmotors und/oder ein gegenläufig rotierenden Zweitmotor mit Ausgleichsmassen vorzusehen.

Neben einem nach der Erfindung auch vorgesehenen Kipp-Ruder zur Erzeugung einer Schräglage und damit eines Vortriebes, können auch im Zuge der Drehmoment-Ausgleichsmittel radial von innen nach außen und/oder von außen nach innen verstellbare rotierende Massen vorgesehen sein, die beispielsweise elektrisch, hydraulisch oder pneumatisch verstellbar sind oder fliehkraftgeregelt, ggf. mit Pufferfedern ausgestattet sein können.

Zur Verbesserung der Aerodynamik und zur Verringerung der Lärmentwicklung sieht die Erfindung in weiterer Ausgestaltung vor, daß der Propeller mit Zentralwelle, Antriebsmotor und Drehmomenten-Ausgleichsmittel von einer aerodynamisch geformten Ummantelung umgeben sind.

Weitere Merkmale, Einzelheiten und Vorteile der Erfindung ergeben sich aufgrund der nachfolgenden Beschreibung sowie anhand der Zeichnungen. Diese zeigt in
- Fig. 1: die Seitenansicht eines Ausführungsbeispieles der Erfindung in vereinfachter Darstellung, teilweise geschnitten,
- Fig. 2: eine Aufsicht gemäß Pfeil II in Fig. 1,
- Fig. 3: die Seitenansicht eines erfindungsgemäßen Flugkörpers in Vorwärtsflugstellung nach einem Ausführungsbeispiel der Erfindung,
- Fig. 4 und 11: weitere Seitenansichten, zum Teil in lediglich prinzipieller Darstellung, abgewandelter Ausführungsbeispiele der Erfindung sowie in
- Fig. 12: eine vereinfachte Seitenansicht einer aerodynamischen Verkleidung.

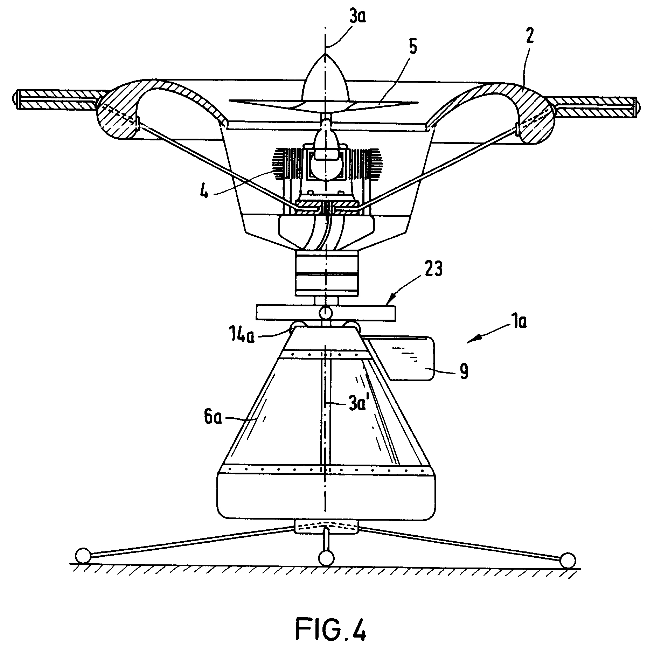

Der in den Figuren allgemein mit 1 bzw. la (Fig. 4) bezeichnete Flugkörper wird von einem im wesentlichen querschnittlich wie eine Tragfläche profilierten Ringflügel 2, einem zur Gesamtmittelachse 3 konzentrischen, von einem Motor 4 angetriebenen Propeller 5 und einem mit dieser Antriebseinheit verbundenen Nutzlastaufnahme 6 gebildet.

Der Ringflügel 2 ist über Ringflügelträger 7 drehfest mit dem Motor 4 verbunden, wobei die Nutzlastaufnahme 6 ihrerseits gegenüber der Antriebseinheit aus Propeller 5 und Ringflügel 2 über ein allgemein mit 8 bezeichnetes Drehlager derart verbunden ist, daß sich die Antriebseinheit relativ zum Nutzlastträger 6 drehen kann, der über ein Drehruder 9 in seiner Lage stabilisiert ist.

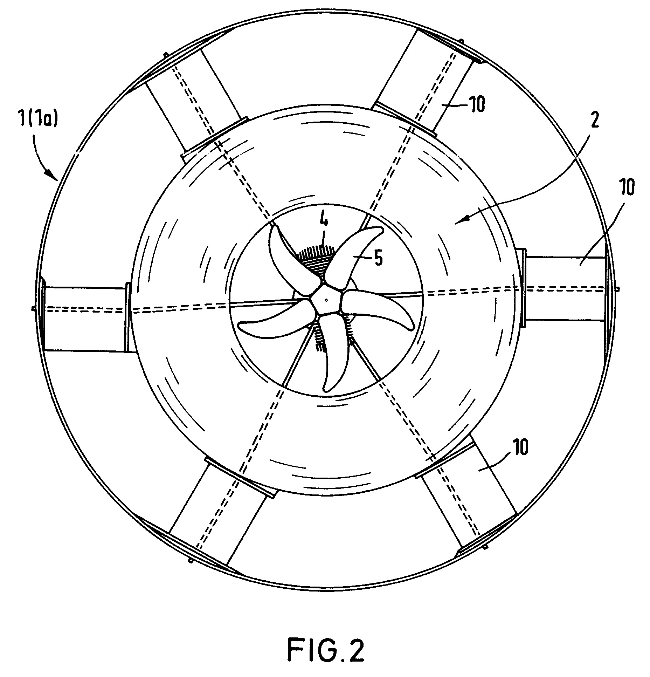

Zur Erhöhung des Auftriebes sind eine Reihe von Maßnahmen getroffen. So weist der Ringflügel 2 an seinem Außenumfang im dargestellten Beispiel gemäß Fig. 2 sechs Flügelelemente 10 auf, andererseits ist in Richtung des durch den Propeller 5 erzeugten Abluftstromes ein Leittrichter 11 vorgesehen, der an seinen unteren freien Enden mit Abluftturbinenschaufeln 12 ausgerüstet ist.

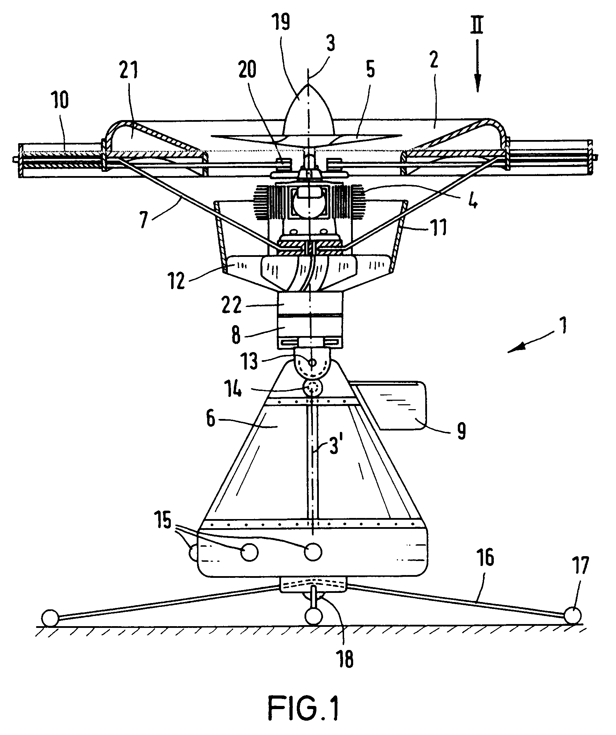

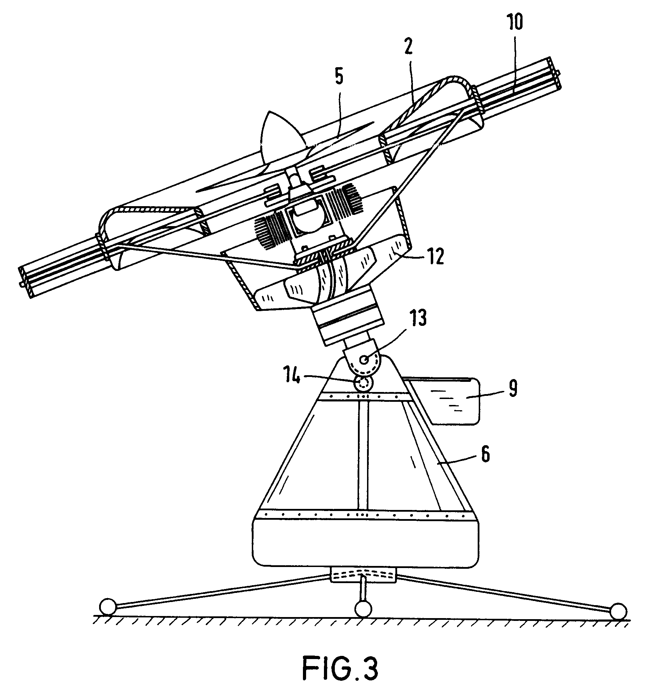

Wie sich insbesondere aus Fig. 1 ergibt, wird bei dem dort dargestellten Ausführungsbeispiel der Übergangsbereich von Nutzlastträger 6 einerseits zur aus Motor, Propeller und Ringflügel bestehenden Antriebseinheit andererseits und einer Einrichtung gebildet, die ein Schwenken dieser beiden Einheiten relativ zueinander um einen Lagerzapfen 13 möglich machen. Dazu kann ein nur angedeuteter Servo-Motor 14 vorgesehen sein. Damit ist es möglich, die Einheit aus der in Fig. 1 dargestellten Position z.B. in die in Fig. 3 dargestellte Position zu verschwenken.

Zur vertikalen Bewegung des Nutzlastträgers 6 wird die Antriebseinheit betätigt, derart, daß sich der Propeller 5 in einer Richtung und der Ringflügel 2 mit den äußeren Flügelelementen 10 in die andere Richtung dreht, so daß sich die dadurch erzeugten beiden Auftriebskomponenten addieren, die gegenläufige Drehrichtung wird noch über die Abluftturbinen-Schaufeln 12 verstärkt. Um in einer Horizontalposition einen Vortrieb zu erreichen, wird der Servo-Motor 14 betätigt, um z.B. die in Fig. 3 dargestellte Position einzunehmen, derart, daß sich die Horizontal- und Vertikalkomponenten überlagern und einen Vorwärtsflug ermöglichen.

An der Nutzlastaufnahme 6 können eine Reihe von weiteren, für Steuerung und Arbeitsweise dieser Nutzlast notwendige oder nützliche Elemente vorgesehen sein, so am Umfang verteilte Hindernis-Warnantennen 15, beispielsweise an den Landebeinen 16 vorgesehene, sogenannte GPS-Antennen 17, wenigstens eine Höhensteuerungsantenne 18 u. dgl. mehr.

In der Propellerkappe 19 kann ein Fallschirm oder ein Bremssack angeordnet sein, was hier nicht näher dargestellt ist. Im oberen Abbildungsbereich der Fig. 1 ist noch eine Gleitlagerung 20 für den Ringflügel 2 dargestellt. Wie dort angedeutet, ist der Ringflügel 2 mit einem inneren Hohlraum 21 versehen, der beispielsweise als Tank nutzbar ist. Eine andere Möglichkeit, den Tank anzuordnen, liegt in der Plazierung oberhalb des Drehlagers 8, der Tank dort ist mit 22 bezeichnet.

In Fig. 4 ist bei ansonsten vergleichbaren Elementen eine andere Möglichkeit der Horizontalflugsteuerung dargestellt. Hier ist die Nutzlastaufnahme 6a im Übergangsbereich zur Antriebseinheit aus Motor 4 und Ringflügel 2 mit innen liegendem Propeller 5 mit einem allgemein mit 23 bezeichneten Verschiebeantrieb ausgerüstet so daß die Nutzlastaufnahme 6a relativ zur Antriebsmittelachse 3a horizontal verschiebbar ist. Dadurch verlagert sich bei einer entsprechenden Verschiebung der Gesamtschwerpunkt des Systems, was zu einer Schräglage insbesondere das Ringflügels 2 mit Propeller 5 führt, derart, daß ein Horizontalflug im Ausführungsbeispiel gemäß Fig. 3 möglich ist.

Nicht in den Figuren dargestellt ist eine Möglichkeit zur Auftriebserhöhung, die darin besteht, die Oberfläche des Ringflügel-Flugkörpers 2 mit Leitschaufeln zu versehen.

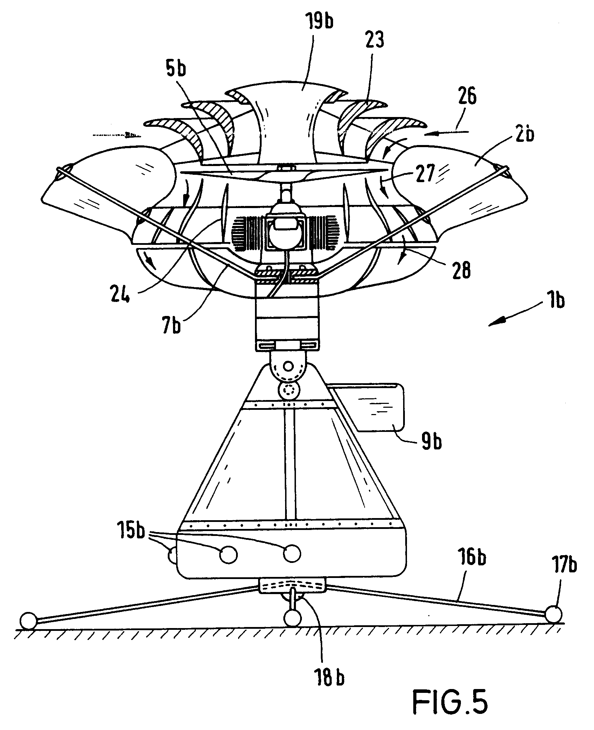

In Fig. 5 ist ein weiteres abgewandeltes Ausführungsbeispiel der Erfindung vorgesehen. Der allgemein mit 1b bezeichnete Ringflügel-Flugkörper weist einen Ringflügel 2b auf an Ringflügelträgern 7b, wobei in Fig. 5 die funktionsmäßig gleichen Teile der vorangegangen beschriebenen Ausführungsbeispiele die gleichen Bezugsziffern tragen, ergänzt durch "b".

Anders als bei den vorangegangen beschriebenen Beispielen ist hier der Propeller 5b oberhalb mit einem Einlauf-Diffusor 23 und unterhalb mit einem Auslauf-Diffusor 24 derart ausgerüstet, daß der Wirkungsgrad erhöht werden kann. So kann, was durch einen kleinen Pfeil 26 angedeutet ist, die Anlaufgeschwindigkeit beispielsweise 30 m/sec. in dem Diffusor 23 betragen, die Geschwindigkeit wird beschleunigt, sie beträgt beispielsweise bei Pfeil 27 35 m/sec. und wird verlangsamt, so daß sie etwa an der Stelle des Pfeiles 28 10 m/sec. beträgt.

Durch die Form der Diffusor-Profile entsteht eine vertikal wirkende Schubkomponente, die den Auftrieb erhöht. Die am Auslauf durch den Auslaufdiffusor 24 erzeugte divergierende Strömung führt zu einer Strömungsgeschwindigkeitsabnahme, wodurch auch der kinetische Druck abnimmt, und zwar im gleichen Verhältnis wie der statische Druck zunimmt, so daß durch den Diffusor ein Großteil der kinetischen Austrittsenergie der Luftströmung als Druckenergie zurückgewonnen werden kann. Bei optimal ausgebildeten Diffusoren können so 80 bis 90 % des kinetischen Druckes in statischen Druck umgewandelt werden, wobei als Nebeneffekt gleichzeitig eine Verminderung der Schallemission des Propellers erreichbar ist.

Wie weiter oben schon angedeutet, kann ein Fallschirm aus der Nabenkappe 9 bzw. dem Propeller-Spinner 19 bei Ausfall des Antriebes und der damit verbundenen Gefahr des Absturzes ausgeschossen werden. Eine zusätzliche Möglichkeit besteht darin, daß die Stummelflügel 10, wie in Fig. 1 angedeutet, am Außenrand Fliehkraftgewichte aufweisen, so daß sie in eine Auto-Rotationsstellung gebracht werden können. Durch die Sinkgeschwindigkeit des Flugkörpers wird die Drehzahl der Ringflügel erhöht, so daß es möglich ist, durch die Fliehkraftgewichte 25 den Anstellwinkel dieser Stummelflügel zu verändern, um die Fallgeschwindigkeit zu bremsen. Wenn die Drehzahl sinkt, wird der Anstellwinkel wiederum zurückgestellt, so daß die Fallgeschwindigkeit erhöht wird, was wiederum die Rotation erhöht, die Fliehkraftgewichte treten erneut in Aktion und so fort.

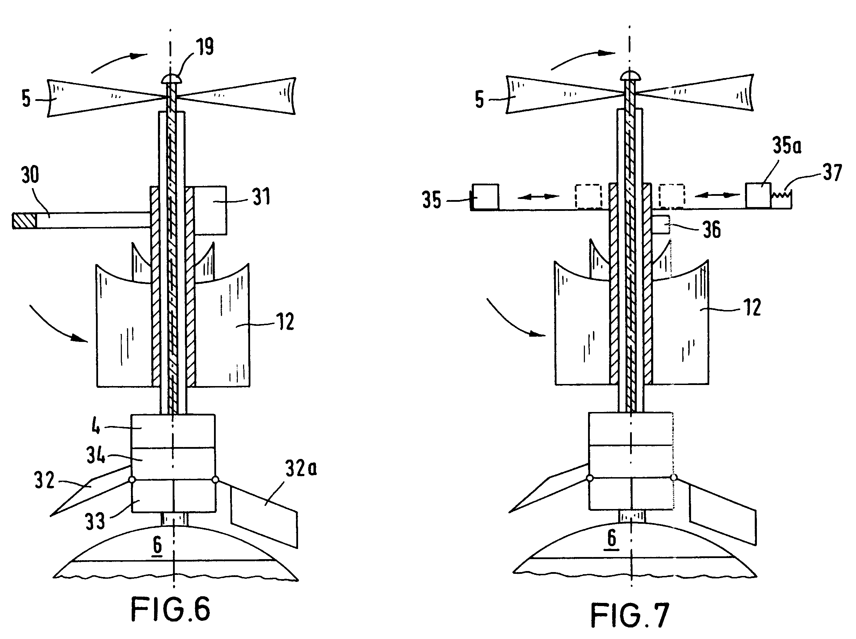

In den Fig. 6 bis 12 sind insbesondere die für den Drehmomentenausgleich relevanten Elemente stark vereinfacht wiedergegeben. Die gegenüber Fig. 1 funktionsmäßig gleichen Teile tragen das gleiche Bezugszeichen.

In Fig. 6 treibt der Motor 4 den Propeller 5 z.B., wie durch einen Pfeil angedeutet, nach rechts, während durch den nach unten gerichteten Luftstrom die Turbine 12 in die andere Richtung rotiert. Wirkmäßig mit der Turbine 12 ist beispielsweise ein rotierender Kranz oder Ring 30 (linke Figurenhälfte in Fig. 6) oder eine rotierende Scheibe oder ein rotierender Zylinder 31 (rechte Figurenhälfte in Fig. 6) verbunden, die für den Drehmomentenausgleich sorgen.

In den Ausführungsbeispielen nach den Fig. 6 und 7 sind Kipp-Ruder 32 bzw. 32a vorgesehen, mit denen das Fluggerät so geschwenkt werden kann, daß nicht nur eine Auf- und Abwärtsbewegung möglich ist, sondern auch ein Vortrieb. Um die Kippbewegung auszuführen sind Schwenk-Servos 33 angedeutet. Dem Motor zugeordnet sind die Hilfsaggregate ebenso wie beispielsweise ein Treibstofftank 34, ein Akkumulator, ein Generator od. dgl.

In Fig. 7 linke Figurenhälfte ist die Möglichkeit dargestellt, rotierende Masse 35 vorzusehen, die z.B. über einen Servo 36 in ihrer Position geändert werden kann, wobei in der rechten Figurenhälfte noch die Möglichkeit angedeutet ist, eine Feder-, Gas- oder Flüssigkeitsdämpfung vorzusehen. Mit beispielsweise einem Flüssigkeitszylinder oder einem Gaszylinder kann die Position der Massen 35 bzw. 35a eingestellt werden. An dieser Stelle sei auf eine Besonderheit hingewiesen, nämlich daß beispielsweise über einen Servo 36 auch die Verstellung der Turbinenblätter möglich gemacht wird, so daß damit bereits für einen Momentenausgleich gesorgt werden kann.

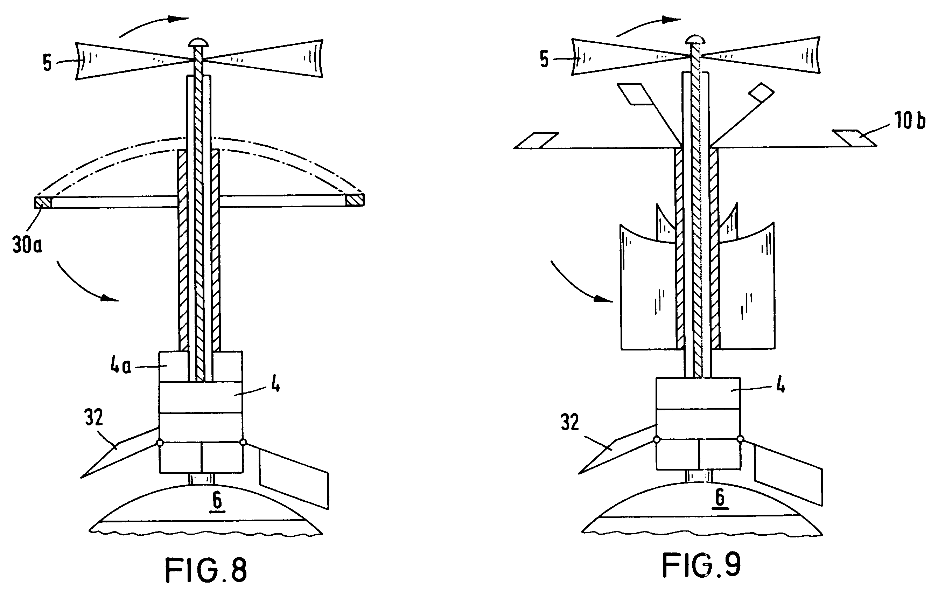

In Fig. 8 ist eine Variante dargestellt, die darin besteht, daß neben dem Antriebsmotor 4 für den Propeller 5 ein weiterer Motor 4a vorgesehen sein kann, um z.B. den Zentrifugalring 30a in Gegenrotation zu versetzen. Auch hier kann wieder ein Zylinder, eine Scheibe od. dgl. vorgesehen sein, erkennbar fehlt aber die entsprechende Turbine.

In Fig. 9 ist die Möglichkeit dargestellt, rotierende Stummelflügel 10b vorzusehen, deren Anstellung auch über einen nicht näher dargestellten Servo od. dgl. veränderbar sein kann.

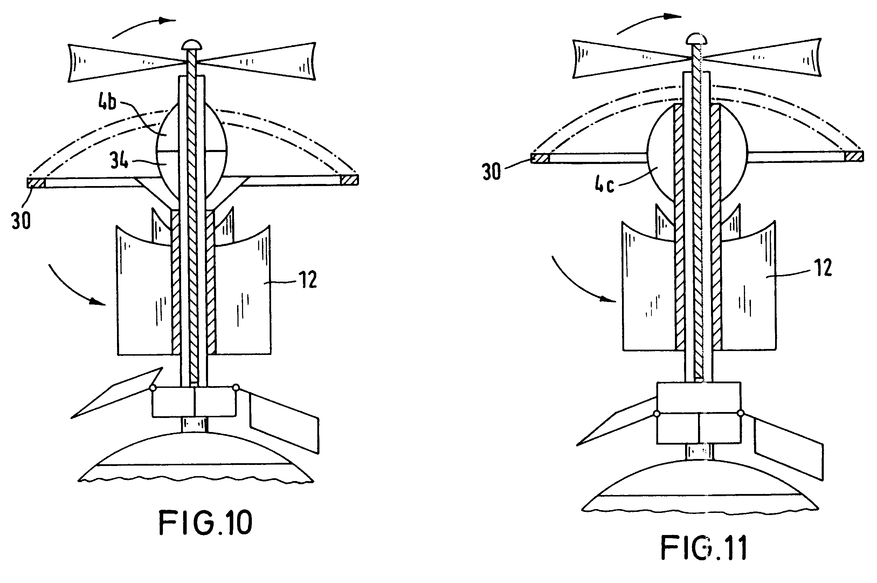

In Fig. 10 ist die Möglichkeit dargestellt, den Motor 4b oberhalb der Turbine 12 anzuordnen, ggf. mit einem Tank, Akkumulator oder Generator 34 in direkter Zuordnung.

In Fig. 11 ist nur der Motor 4c im Bereich des rotierenden Ringes 30 vorgesehen. Auch hier kann beispielsweise die Einrichtung so getroffen sein, daß ein Element des Motors den Propeller in die eine Richtung treibt, während ein anderes Element des Motors den Ring 30 in die andere Richtung treibt. In einem solchen Falle kann die Turbine 12 entfallen.

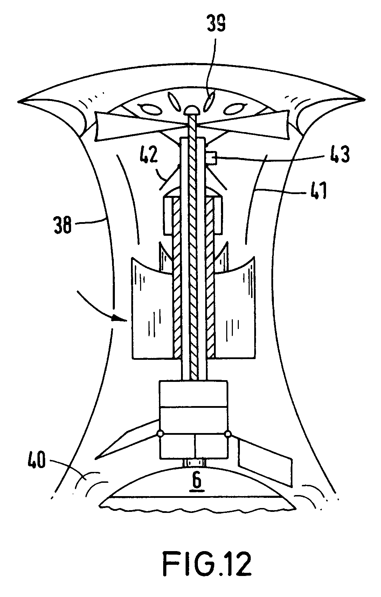

Schließlich ist in Fig. 12 noch die Möglichkeit dargestellt, alle Elemente mit einer aerodynamisch gestalteten Umkleidung 38 zu versehen, die einen Strömungsschacht bildet mit oberen Strömungsleitschaufeln 39 in einem Ansaugdiffusor und unteren Leitschaufeln 40 in einem Auslaßdiffusor, was neben einer Optimierung der Strömung auch zu einer Lärmreduzierung führt. Es können auch innere Leitschaufeln 41 vorgesehen sein, was in der Figur nur angedeutet ist. Im übrigen können auch Störklappen 42 vorgesehen sein, die über einen Servo 43 einstellbar sind.

Natürlich sind die beschriebenen Ausführungsbeispiele der Erfindung noch in vielfacher Hinsicht abzuändern, ohne den Grundgedanken zu verlassen. Die Erfindung ist insbesondere nicht auf die hier dargestellte bevorzugte Form des Nutzlastträgers beschränkt, auch nicht auf die hier vereinfacht wiedergegebene Profilierung des Ringflügels bzw. der außen angesetzten Flügelelemente u. dgl. mehr. Erkennbar ergibt sich eine große Vielfältigkeit des erfindungsgemäßen Flugkörpers dadurch, daß die entsprechenden Funktionsstufen in jeder gewünschten Anordnung zueinander positionierbar sind. Die Antriebseinheit, die Turbine, der Gegendrehmomentkörper und die Nutzlast können in ihrer Lage zueinander verändert werden, ohne die Funktionsfähigkeit des Flugkörpers zu gefährden. Durch Schwerpunktverlagerung oder Kipp-Ruder kann für eine alternative Steuerung gesorgt werden u. dgl. mehr.

## Patentansprüche

1. Drehmomentausgeglichener Flugkörper (1) mit einem in einer Zentralachse (3) angeordneten motorgetriebenen Propeller (5) und einer Nutzlastaufnahme (6), wobei der zentrische, vom Antriebsmotor (4) angetriebene Propeller (5) einerseits und relativ dazu der Motor (4) und/oder ein daran angeordnetes Drehmomenten-Ausgleichmittel andererseits gegenläufig drehbar und insgesamt gegenüber der Nutzlastaufnahme im wesentlichen um die gleiche Achse (3,3') drehbar gelagert sind, und daß zum Verschwenken oder Verschieben der Nutzlastaufnahme relativ zum Antriebsmotor ein Servo-Antrieb (14,14a) vorgesehen ist,
dadurch gekennzeichnet,
daß als Drehmomenten-Ausgleichmittel ein Ringflügel (2) vorgesehen ist.

2. Flugkörper nach Anspruch 1,
dadurch gekennzeichnet,
daß im Abluftstrom des Propellers (5) Abluftturbinen-Schaufeln (12) mit drehfester Verbindung zum Ringflügel (2) vorgesehen sind.

3. Flugkörper nach Anspruch 1 oder 2,
dadurch gekennzeichnet,
daß der Ringflügel von einem im wesentlichen hohl ausgebildeten Ringkörper (2) mit nach außen weisenden, im wesentlichen in der Ruhelage horizontal ausgerichteten Flügelelementen (10) gebildet ist.

4. Flugkörper nach einem der vorangehenden Ansprüche,
dadurch gekennzeichnet,
daß der Ringflügel (2) an seiner Oberfläche mit Leitschaufeln zur Erhöhung des Auftriebes versehen ist.

5. Flugkörper nach einem der vorangehenden Ansprüche,
dadurch gekennzeichnet,
daß im Übergangsbereich zwischen Antriebsmotor (4) mit Propeller (5) und Ringflügel (2) und der Nutzlastaufnahme (6) eine Schwenkeinrichtung um einen Lagerzapfen (13) zur Veränderung des Vertikalwinkels zwischen der Antriebsmittelachse (3) einerseits und der Nutzlastmittelachse (3') andererseits vorgesehen ist.

6. Flugkörper nach einem der vorangehenden Ansprüche,
dadurch gekennzeichnet,
daß im Übergangsbereich zwischen Antriebsmotor (4) mit Propeller (5) und Ringflügel (2) und der Nutzlastaufnahme (6a) zur Verstellung des Systemschwerpunktes ein Verschiebeantrieb (23) zum Verschieben der Antriebsmittelachse (3a) in ihrer Wirklinie zur Nutzlastaufnahme-Mittelachse (3a') vorgesehen ist.

7. Flugkörper nach einem der vorangehenden Ansprüche,
dadurch gekennzeichnet,
daß am Ringflügel (2b) ein Einlauf-Diffusor (23) oberhalb des Propellers (5b) und ein Auslauf-Diffusor (24) unterhalb des Propellers (5b) (Fig. 5) vorgesehen ist.

8. Flugkörper nach einem der vorangehenden Ansprüche,
dadurch gekennzeichnet,
daß die Flügelelemente bzw. Stummelflügel (10) an ihrem Außenrand mit Fliehkraft-Gewichten (25) zur Veränderung des Stellwinkels der Stummelflügel (10) beim motorlosen Fallen des Ringflügel-Flugkörpers (1) vorgesehen sind.

9. Drehmomentausgeglichener Flugkörper (1) mit einem in einer Zentralachse (3) angeordneten motorgetriebenen Propeller (5) und einer Nutzlastaufnahme (6), wobei der zentrische, vom Antriebsmotor (4) angetriebene Propeller (5) einerseits und relativ dazu der Motor (4) und/oder ein daran angeordnetes Drehmomenten-Ausgleichmittel andererseits gegenläufig drehbar und insgesamt gegenüber der Nutzlastaufnahme im wesentlichen um die gleiche Achse (3,3') drehbar gelagert sind, und daß zum verschwenken oder verschieben der Nutzlastaufnahme relativ zum Antriebsmotor ein Servo-Antrieb (14,14a) vorgesehen ist,
dadurch gekennzeichnet,
daß als Drehmomenten-Ausgleichmittel eine Abluftturbine (12), ein zum Propeller (5) gegenläufig rotierender Ring (30), eine Scheibe, ein Zylinder (31) und/oder ein Stummelflügel aufweisender Drehkranz vorgesehen sind.

10. Flugkörper nach Anspruch 1 oder 9,
dadurch gekennzeichnet,
daß als Drehmomenten-Ausgleichmittel gegenläufig rotierende Elemente des Antriebsmotors und/oder ein gegenläufig rotierender Zweitmotor mit Ausgleichsmassen vorgesehen ist.

11. Flugkörper nach einem der vorangehenden Ansprüche,
dadurch gekennzeichnet,
daß das Drehmomenten-Ausgleichmittel mit radial von innen nach außen und/oder von außen nach innen verstellbaren rotierenden Massen (35,35a) ausgerüstet ist.

12. Flugkörper nach einem der vorangehenden Ansprüche,
dadurch gekennzeichnet,
daß der Propeller (5) mit Zentralwelle, Antriebsmotor und Drehmomenten-Ausgleichmittel von einer aerodynamisch geformten Ummantelung (38) umgeben sind.

## Claims

1. A torque-compensated aerodyne (1) having a motor-driven propeller (5) arranged on a central axis (3) and a load-carrying means (6), wherein the central propeller (5) which is driven by the drive motor (4) on the one hand and relative thereto the motor (4) and/or a torque-compensating means arranged thereon on the other hand are rotatable in opposite directions and are altogether mounted rotatably with respect to the load-carrying means substantially about the same axis (3, 3'), and a servo drive (14, 14a) is provided for pivoting or displacing the load-carrying means relative to the drive motor, characterised in that an annular wing (2) is provided as the torque-compensating means.

2. An aerodyne according to claim 1 characterised in that provided in the slipstream of the propeller (5) are slipstream turbine blades (12) with a non-rotatable connection to the annular wing (2).

3. An aerodyne according to claim 1 or claim 2 characterised in that the annular wing is formed by a substantially hollow annular body (2) with outwardly facing wing elements (10) which are oriented substantially horizontally in the rest position.

4. An aerodyne according to one of the preceding claims characterised in that the annular wing (2) is provided with guide vanes at its surface to increase the lift.

5. An aerodyne according to one of the preceding claims characterised in that provided in the transitional region between the drive motor (4) with propeller (5) and annular wing (2) and the load-carrying means (6) is a pivoting means pivoting about a mounting trunnion (13) for varying the vertical angle between the drive centre line (3) on the one hand and the load-carrying means centre line (3') on the other hand.

6. An aerodyne according to one of the preceding claims characterised in that provided in the transitional region between the drive motor (4) with propeller (5) and annular wing (2) and the load-carrying means (6a) for adjustment of the centre of gravity of the system is a displacement drive (23) for displacing the drive centre line (3a) in respect of its line of action relative to the load-carrying means centre line (3a').

7. An aerodyne according to one of the preceding claims characterised in that provided on the annular wing (2b) is an intake diffuser (23) above the propeller (5b) and a discharge diffuser (24) below the propeller (5b) (Figure 5).

8. An aerodyne according to one of the preceding claims characterised in that the wing elements or stub wings (10) are provided at their outer edge with centrifugal weights (25) for varying the angle of incidence of the stub wings (10) upon motor-less dropping of the annular-wing aerodyne (1).

9. A torque-compensated aerodyne (1) having a motor-driven propeller (5) arranged on a central axis (3) and a load-carrying means (6), wherein the central propeller (5) which is driven by the drive motor (4) on the one hand and relative thereto the motor (4) and/or a torque-compensating means arranged thereon on the other hand are rotatable in opposite directions and are altogether mounted rotatably with respect to the load-carrying means substantially about the same axis (3, 3'), and a servo drive (14, 14a) is provided for pivoting or displacing the load-carrying meanns relative to the drive motor, characterised in that provided as the torque-compensating means is a slipstream turbine (12), a ring (30) which rotates in the opposite direction to the propeller (5), a disc, a cylinder (31) and/or a rotary rim member having stub wings.

10. An aerodyne according to claim 1 or claim 9 characterised in that provided as the torque-compensating means are oppositely rotating elements of the drive motor and/or an oppositely rotating second motor with compensating masses.

11. An aerodyne according to one of the preceding claims characterised in that the torque-compensating means is provided with radially outwardly and/or inwardly displaceable rotating masses (35, 35a).

12. An aerodyne according to one of the preceding claims characterised in that the propeller (5) with central shaft, drive motor and torque-compensating means are surrounded by an aerodynamically shaped shroud (38).

## Revendications

1. Aéronef (1) à compensation de couples de rotation, comprenant une hélice (5) à entraînement motorisé, disposée selon un axe central (3), et un receveur (6) de charges utiles, d'une part l'hélice centrée (5) entraînée par le moteur d'entraînement (4) et, d'autre part, vis-à-vis de cette dernière, le moteur (4) et/ou un moyen de compensation de couples de rotation, placé sur ledit moteur, pouvant tourner dans des sens opposés et étant globalement montés à rotation par rapport au receveur de charges utiles, pour l'essentiel autour du même axe (3, 3'), un servo-entraînement (14, 14a) étant prévu pour imprimer des pivotements ou des coulissements au receveur de charges utiles par rapport au moteur d'entraînement,
caractérisé par le fait
qu'une aile annulaire (2) est prévue en tant que moyen de compensation de couples de rotation.

2. Aéronef selon la revendication 1,
caractérisé par le fait
que des aubes (12) de turbine à air de sortie, présentant une liaison à verrouillage rotatif avec l'aile annulaire (2), sont prévues dans le courant d'air de sortie de l'hélice (5).

3. Aéronef selon la revendication 1 ou 2,
caractérisé par le fait
que l'aile annulaire est formée par un corps annulaire (2) de réalisation pour l'essentiel creuse, comportant des éléments d'ailettes (10) diriges vers l'extérieur et orientés, pour l'essentiel, horizontalement dans la position de repos.

4. Aéronef selon l'une des revendications précédentes,
caractérisé par le fait
que l'aile annulaire (2) est pourvue de pales directrices, à sa surface, en vue d'accroître la sustentation.

5. Aéronef selon l'une des revendications précédentes,
caractérisé par le fait
que, dans la zone de transition entre le receveur (6) de charges utiles, et le moteur d'entraînement (4) associé à l'hélice (5) et à l'aile annulaire (2), un dispositif de pivotement est prévu, autour d'un tourillon de portée (13) , pour modifier l'angle vertical entre, d'une part, l'axe médian d'entraînement (3) et, d'autre part, l'axe médian (3') des charges utiles.

6. Aéronef selon l'une des revendications précédentes,
caractérisé par le fait
que, dans la zone de transition entre le receveur (6a) de charges utiles, et le moteur d'entraînement (4) associé à l'hélice (5) et à l'aile annulaire (2), en vue de déplacer le centre de gravité du système, un entraînement (23) en coulissement est prévu pour faire coulisser l'axe médian d'entraînement (3a) sur sa ligne d'action par rapport à l'axe médian (3a') du receveur de charges utiles.

7. Aéronef selon l'une des revendications précédentes,
caractérisé par le fait
qu'un diffuseur d'entrée (23) placé au-dessus de l'hélice (5b), et un diffuseur de sortie (24) placé au-dessous de l'hélice (5b) (figure 5), sont prévus sur l'aile annulaire (2b).

8. Aéronef selon l'une des revendications précédentes,
caractérisé par le fait
que les éléments d'ailettes ou segments d'ailettes (10) sont respectivement prévus, sur leur bord extérieur, avec des masses centrifuges (25) pour modifier l'angle de réglage desdits segments d'ailettes (10) lors de la chute, sans moteur, de l'aéronef (1) à aile annulaire.

9. Aéronef (1) a compensation de couples de rotation, comprenant une hélice (5) à entraînement motorisé, disposée selon un axe central (3), et un receveur (6) de charges utiles, d'une part l'hélice centrée (5) entraînée par le moteur d'entraînement (4) et, d'autre part, vis-à-vis de cette dernière, le moteur (4) et/ou un moyen de compensation de couples de rototion, place sur ledit moteur, pouvant tourner dans des sens opposés et étant globalement montés à rotation par rapport au receveur de charges utiles, pour l'essentiel autour du même axe (3, 3'), un servo-entraînement (14, 14a) étant prévu pour imprimer des pivotements ou des coulissements au receveur de charges utiles par rapport au moteur d'entraînement,
caractérisé par la fait
qu'une turbine (12) à air de sortie, un anneau (30) tournant en sens inverse de l'hélice (5), un disque, un cylindre (31) et/ou une couronne rotative munie de segments d'ailettes, est (sont) prévu(s) en tant que moyen(s) de compensation de couples de rotation.

10. Aéronef selon la revendication 1 ou 9,
caractérisé par le fait
que des éléments du moteur d'entraînement animés de rotations en sens inverse, et/ou un moteur additionnel tournant en sens inverse et pourvu de masses d'équilibrage, sont (est) prévu(s) en tant que moyen(s) de compensation de couples de rotation.

11. Aéronef selon l'une des revendications précédentes,
caractérisé par le fait
que le moyen de compensation de couples de rotation est équipé de masses rotatives (35, 35a) déplaçables radialement de l'intérleur vers l'extérieur et/ou de l'extérieur vers l'intérieur.

12. Aéronef selon l'une des revendications précédentes,
caractérisé par le fait
que l'hélice (5), ainsi que l'arbre central, le moteur d'entraînement et le moyen de compensation de couples de rotation, sont entourés par un chemisage (38) de configuration aérodynamique.
